# EUROPÄISCHE PATENTANMELDUNG

(11) **EP 4 324 323 A1**
(43) Veröffentlichungstag der Anmeldung: **21.02.2024**
(21) Anmeldenummer: 23179422.3
(22) Anmeldetag: 15.06.2023
(51) Int. Cl.: A01D 41/12, A01D 41/127, G01F 1/56, G01F 1/64, G01F 1/704, G01F 1/74

(54) **SELBSTFAHRENDER MÄHDRESCHER MIT EINEM SENSORSYSTEM ZUR KORNVERLUSTERFASSUNG**

(30) Priorität: 16.08.2022 DE 102022120634
(71) Anmelder: CLAAS Selbstfahrende Erntemaschinen GmbH, 33428 Harsewinkel (DE)
(72) Erfinder: Schwarz, Dr. Michael, 53604 Bad Honnef (DE); Diekamp, Andreas, 49176 Hilter (DE); Vieregge, Christopher, 32694 Dörentrup (DE); Beckmann, Hermann-Konstantin, 32584 Löhne (DE); Neitemeier, Dennis, 59510 Lippetal (DE)
(74) Vertreter: CLAAS Gruppe

(57) **Zusammenfassung**

Die vorliegende Erfindung betrifft einen selbstfahrenden Mähdrescher (1) zur Aufnahme und Behandlung von Erntegut.

Die vorliegende Erfindung beruht auf dem allgemeinen Gedanken, dass ein Sensorsystem (23) wenigstens ein in einer Sauggebläseanordnung (12) angeordnetes kapazitives Bauelement (35) aufweist.

## Beschreibung

Die vorliegende Erfindung betrifft einen selbstfahrenden Mähdrescher zur Aufnahme und Behandlung von Erntegut.

Die DE 10 2018 131 432 A1 offenbart einen selbstfahrenden Mähdrescher, umfassend eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung und zumindest eine Verteilvorrichtung zur Annahme und Ausbringung eines die Häckselvorrichtung durchlaufenden Gutstroms. Hierbei ist im Bereich der Austrittsöffnung der Sauggebläseanordnung wenigstens ein als Verlustsensor ausgeführtes Sensorelement angeordnet. Die Sauggebläseanordnung ist als Reinigungsgebläse der Reinigungsvorrichtung ausgebildet und dient dazu, einen im Wesentlichen aus Nichtkornbestandteilen bestehenden Luft- und Gutstroms aus Kurzstroh, Spreu und dergleichen aus einem Maschinengehäuse des Mähdreschers heraus zu fördern und an die Verteilvorrichtung zu übergeben, welche den Luft- und Gutstrom über eine Verteilbreite auf dem Feldboden verteilt. Dieser Luft- und Gutstrom weist neben Luft insbesondere Nichtkornbestandteile, wie Spreu und Stroh, und möglicherweise auch Verlustkörner auf, die Kornverlustbestandteile ausbilden. Der Verlustsensor wird zur Erfassung des gesamten Luft- und Gutstroms eingesetzt, da der Impuls von Nichtkornbestandteilen und Kornverlustbestandteilen verwendet wird.

Der vorliegenden Erfindung liegt die Aufgabe zugrunde, eine verbesserte oder zumindest eine alternative Ausführungsform eines selbstfahrenden Mähdreschers anzugeben, wobei insbesondere eine Ermittlung der Menge der Verlustkörner eines Luft- und Gutstroms ermöglicht wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass ein Sensorsystem wenigstens ein in einer Sauggebläseanordnung angeordnetes kapazitives Bauelement aufweist.

Der erfindungsgemäße selbstfahrende Mähdrescher ist zur Aufnahme und Behandlung von Erntegut ausgebildet und weist eine Sauggebläseanordnung und ein Sensorsystem auf, wobei dieses Sensorsystem wenigstens ein in der Sauggebläseanordnung angeordnetes kapazitives Bauelement, insbesondere zur Kornverlusterfassung, aufweist. Der selbstfahrende Mähdrescher weist eine Reinigungsvorrichtung auf, die derart wenigstens teilweise in einem Ansaugbereich der Sauggebläseanordnung angeordnet ist, dass die Sauggebläseanordnung einen Luft- und Gutstrom wenigstens teilweise ausgehend von der Reinigungsvorrichtung ansaugen kann. Die Sauggebläseanordnung ist der Reinigungsvorrichtung nachgeordnet. Unter der Kornverlusterfassung kann zu verstehen sein, dass eine Menge der Verlustkörner unabhängig vom Nichtkornbestandteil ermittelt wird. Mit anderen Worten ausgedrückt, wird das Sensorsystem bei einer konstanten Menge der Verlustkörner und einer Variation der Menge des Nichtkornbestandteils keine Veränderung der Menge der Verlustkörner ermitteln, sondern stets die konstante Menge der Verlustkörner ermitteln. Falls sich jedoch die Anzahl der Verlustkörner verändert, erfasst das Sensorsystem eine Veränderung der Menge der Verlustkörner. Somit wird eine Bestimmung der Körner und/oder der Körneranzahl und/oder Körnermenge, die das Sauggebläse verlassen, ermöglicht.

Bei einer vorteilhaften Weiterbildung der erfindungsgemäßen Lösung ist vorgesehen, dass das kapazitive Bauelement im Bereich zumindest einer Austrittsöffnung der Sauggebläseanordnung angeordnet ist. Mit anderen Worten ausgedrückt, ist das kapazitive Bauelement innerhalb der Sauggebläseanordnung angeordnet. Das kapazitive Bauelement kann teilweise oder vollständig innerhalb einer Wandung der Sauggebläseanordnung angeordnet sein. Das kapazitive Bauelement kann teilweise an und/oder in einem Außenboden der Sauggebläseanordnung angeordnet sein. Das kapazitive Bauelement kann vollständig an und/oder in einem Außenboden der Sauggebläseanordnung angeordnet sein.

Bei einer vorteilhaften Weiterbildung der erfindungsgemäßen Lösung ist vorgesehen, dass das Sensorsystem einen Schwingkreis und eine Messeinrichtung aufweist, wobei der Schwingkreis aus zumindest dem einem kapazitiven Bauelement mit einer Kapazität und einem induktiven Bauelement besteht, wobei ein die Sauggebläseanordnung durchlaufender Luft- und Gutstrom das kapazitive Bauelement passiert und zumindest temporär die Kapazität des kapazitiven Bauelementes verändert, wobei die Messeinrichtung die Resonanzfrequenz des Schwingkreises bestimmt.

Das Sensorsystem misst die Auswirkung des Luft- und Gutstroms auf die Kapazität des kapazitiven Bauelementes. Durch die Änderung der Kapazität wird die Resonanzfrequenz des Schwingkreises verändert. Die Änderung der Resonanzfrequenz bzw. der Kapazität kann gemessen werden und damit die Verlustkörner des Luft- und Gutstroms erfasst werden. Die erfassten Verlustkörner des Luft- und Gutstroms können gezählt werden.

Das induktive Bauelement kann in die Messeinrichtung integriert sein, bspw. in Form eines integrierten Schaltkreises. Bei bekannter Induktivität kann aus der Resonanzfrequenz direkt auf die Kapazität geschlossen werden. Anstelle der Änderung der Resonanzfrequenz kann daher auch die Änderung der Kapazität bestimmt werden. Die Resonanzfrequenz ist bevorzugt größer ist als 1 kHz. Je höher die Resonanzfrequenz ist, umso schneller kann sie genau vermessen werden. Die Resonanzfrequenz kann bis 1 MHz betragen.

Die Stärke der Änderung der Kapazität und der Resonanzfrequenz hängt von der Permittivität des Luft- und Gutstroms ab. Mit der Bestimmung der Resonanzfrequenz ist das Sensorsystem in der Lage, auf die Permittivität des Luft- und Gutstroms zu schließen. Die Permittivität wird auch Permittivitäts- oder Dielektrizitätszahl genannt.

Das Sensorsystem ist bevorzugt dazu vorgesehen und eingerichtet, zwischen Kornelementen bzw. Verlustkörnern und Nichtkornelementen zu unterscheiden. Kornelemente bzw. Verlustkörner besitzen eine wesentlich größere Permittivität als Nichtkornelemente, insbesondere als Strohelemente. Ein Kornelement bzw. Verlustkorn ändert daher die Resonanzfrequenz stärker als ein Strohelement. Die zu unterscheidende Eigenschaft der Elemente des Luft- und Gutstroms ist, in diesem Fall, ob das jeweilige Element ein Kornelement bzw. Verlustkorn oder ein Nichtkornelement, insbesondere ein Strohelement, ist.

Bei einer vorteilhaften Weiterbildung der erfindungsgemäßen Lösung ist vorgesehen, dass das kapazitive Bauelement als planarer Kondensator ausgebildet ist. Die Kapazität eines planaren Kondensators wird durch Elemente in der direkten Nähe seiner Oberfläche beeinflusst. Ein planarer Kondensator kann am Rand des Luft- und Gutstroms montiert werden und detektiert die an ihm vorbeifließenden Elemente des Luft- und Gutstroms. Ein planarer Kondensator stört den Luft- und Gutstroms weniger als ein Plattenkondensator mit zwei Platten. Ein solcher planaren Kondensator kann beispielsweise eine rechteckförmige Ausgestaltung mit einer Länge und einer Breite aufweisen. Die Länge kann beispielsweise ungleich der Breite sein. Die Länge und/oder die Breite der rechteckförmigen Ausgestaltung kann 2 cm bis 5 cm, insbesondere 2,5 cm, aufweisen.

Bei einer vorteilhaften Weiterbildung der erfindungsgemäßen Lösung ist vorgesehen, dass das kapazitive Bauelement als Interdigitalkondensator ausgebildet ist. Ein Interdigitalkondensator weißt über seine Oberfläche eine gleichmäßige Sensitivität für Elemente aus dem Luft- und Gutstroms auf. Ein Element aus dem Luft- und Gutstroms beeinflusst die Resonanzfrequenz also in gleichem Maße unabhängig von seiner Position.

Bei einer vorteilhaften Weiterbildung der erfindungsgemäßen Lösung ist vorgesehen, dass das Sensorsystem mehrere Schwingkreise mit mehreren kapazitiven Bauelementen aufweist, wobei die kapazitiven Bauelemente in der Sauggebläseanordnung angeordnet sind.

Bei einer vorteilhaften Weiterbildung der erfindungsgemäßen Lösung ist vorgesehen, dass die Messeinrichtung die Resonanzfrequenz mit einer vorbestimmten Messfrequenz bestimmt. Durch die regelmäßige Bestimmung der Resonanzfrequenz wird der zeitliche Verlauf der Messung von Elementen des Luft- und Gutstroms durch das Sensorsystem bestimmt.

Bei einer vorteilhaften Weiterbildung der erfindungsgemäßen Lösung ist vorgesehen, dass die Resonanzfrequenz größer ist als das Zehnfache der Messfrequenz. Die Messfrequenz ist bevorzugt kleiner als ein Zehntel der Resonanzfrequenz. Durch die im Verhältnis zur Resonanzfrequenz kleine Messfrequenz können in jeder Messung mindestens zehn Perioden der Schwingungen des Schwingkreises zur Bestimmung der Resonanzfrequenz vermessen werden. Dadurch wird die Bestimmung der Resonanzfrequenz genauer als wenn nur wenige Perioden vermessen werden.

Die Messfrequenz multipliziert mit der Länge des kapazitiven Bauelementes in Bewegungsrichtung des Luft- und Gutstroms ist bevorzugt größer ist als 2m/s, besonders bevorzugt größer als 30m/s, ganz besonders bevorzugt größer als 40m/s. Die Messfrequenz multipliziert mit der Länge des kapazitiven Bauelementes in Bewegungsrichtung des Luft- und Gutstroms gibt die Bewegungsgeschwindigkeit der Elemente des Luft- und Gutstroms an, die noch mit Sicherheit von dem Sensorsystem erfasst werden.

Von der Messfrequenz zu unterscheiden ist die Abtastfrequenz. Die Abtastfrequenz gibt an, wie oft eine Spannung und/oder ein Strom im Schwingkreis bestimmt wird. Die Abtastfrequenz ist mindestens doppelt so groß wie die vom Schwingkreis erwartete Resonanzfrequenz. Bevorzugt ist die Abtastfrequenz zehnmal so groß wie die vom Schwingkreis erwartete Resonanzfrequenz.

Bei einer vorteilhaften Weiterbildung der erfindungsgemäßen Lösung ist vorgesehen, dass die Messeinrichtung dazu vorgesehen und eingerichtet ist, aus der Resonanzfrequenz des Schwingkreises einen Kornverlustwert bezüglich der im Luft- und Gutstrom mitströmenden Verlustkörner zu ermitteln. Das Sensorsystem und/oder die Messeinrichtung ist dazu vorgesehen und eingerichtet, aus der Resonanzfrequenz des Schwingkreises auf zumindest eine Eigenschaft, insbesondere die Anzahl, der Verlustkörner des Luft- und Gutstroms zu schließen.

Bei einer vorteilhaften Weiterbildung der erfindungsgemäßen Lösung ist vorgesehen, dass der selbstfahrende Mähdrescher eine Dreschvorrichtung, eine Abscheidevorrichtung und eine Reinigungsvorrichtung, eine Häckselvorrichtung sowie zumindest eine Verteilvorrichtung zur Annahme und Ausbringung eines die Häckselvorrichtung durchlaufenden Gutstroms aufweist, wobei der Reinigungsvorrichtung die Sauggebläseanordnung mit zumindest einem Gehäuse, zumindest einer Eintrittsöffnung und zumindest einer Austrittsöffnung nachgeordnet ist, wobei zumindest eine Eintrittsöffnung der Sauggebläseanordnung der Reinigungsvorrichtung zugewandt und die zumindest eine Austrittsöffnung der Sauggebläseanordnung unterhalb der Häckselvorrichtung positioniert ist, so dass eine Übergabe eines von der Sauggebläseanordnung durch die zumindest eine Eintrittsöffnung angesaugten Luft- und Gutstroms an die Verteilvorrichtung in einem unteren Bereich der Verteilvorrichtung erfolgt, wobei die Verteilvorrichtung in einem oberen Bereich den die Häckselvorrichtung durchlaufenden Gutstrom und in dem unteren Bereich den Luft- und Gutstrom ausbringt.

Bei einer vorteilhaften Weiterbildung der erfindungsgemäßen Lösung ist vorgesehen, dass in dem zumindest einem Gehäuse zumindest ein Läufer um eine horizontale Achse rotierend angeordnet ist, und/oder dass zumindest ein Gehäuse zwei spiegelbildlich angeordnete konische Gehäuseabschnitte aufweist, die koaxial zu der horizontalen Achse angeordnet sind. Die zumindest abschnittsweise kegelscheibenförmig ausgebildeten Gehäuseabschnitte umgeben den zumindest einen um die horizontale Achse rotierend angeordneten Läufer.

Bei einer vorteilhaften Weiterbildung der erfindungsgemäßen Lösung ist vorgesehen, dass die zumindest eine Eintrittsöffnung als eine koaxial zu der horizontalen Achse angeordnete Öffnung in zumindest einem der Gehäuseabschnitte ausgebildet ist und die zumindest eine Austrittsöffnung als eine sich senkrecht zu einem einen Bereich zwischen Sauggebläseanordnung und Verteilvorrichtung überbrückenden Führungssegment erstreckende Öffnung. Die Zuführung des von dem zumindest einen Läufer angesaugten Luft- und Gutstromes in das Gehäuse erfolgt dabei im Wesentlichen von vorne, d.h. im Wesentlichen parallel zur Ebene von Sieben der Reinigungsvorrichtung. Die Abgabe des Luft- und Gutstromes erfolgt durch die zumindest eine Austrittsöffnung, die derart positioniert ist, dass ein annähernd tangentialer Übergang des Luft- und Gutstromes von der zumindest einen Austrittsöffnung in die nachgeordnete Verteilvorrichtung erfolgt. Dabei kann durch das Führungssegment ein freier Abschnitt zwischen der Sauggebläseanordnung und der Verteilvorrichtung überbrückt werden, in welchem die Häckselvorrichtung positioniert ist. Der Luft- und Gutstrom überströmt die Oberfläche des Führungssegmentes und kann somit gehäckseltes Gut in Richtung der Verteilvorrichtung weitertransportieren.

Insbesondere kann die zumindest eine Eintrittsöffnung durch jeweils einen sich abschnittsweise in Umfangsrichtung der horizontalen Achse erstreckenden, sich in axialer Richtung verjüngenden Leitabschnitt begrenzt sein, wobei der Leitabschnitt auf seiner der Reinigungsvorrichtung zugewandten Seite abschnittsweise unterbrochen ist. Der Leitabschnitt dient der Annahme um Umlenkung des aus Richtung der Reinigungsvorrichtung kommenden Luft- und Gutstromes. Die Anordnung des Leitabschnitts ist derart gewählt, dass die abschnittsweise Unterbrechung eine Annahme des Luft- und Gutstromes von vorne, d.h. im Wesentlichen parallel zur Ebene der Siebe der Reinigungsvorrichtung ermöglicht. Die Konizität des jeweiligen Leitabschnitts kann eine Umlenkung des angesaugten Luft- und Gutstromes in die Eintrittsöffnung des Gehäuses bewirken. Zugleich kann der jeweilige Leitanschnitt die Ansaugung von Luft- und Gut abschnittsweise begrenzen. Insbesondere kann eine Begrenzung der Ansaugung auf der Seite der jeweiligen Eintrittsöffnung erfolgen, welche der Verteilvorrichtung zugewandt ist.

Gemäß einer vorteilhaften Weiterbildung können im Bereich der Eintrittsöffnung Schneidelemente an einer um die horizontale Achse rotierenden Welle angeordnet sein. Die Schneidelemente können die Nichtkornbestandteile im angesaugten Luft- und Gutstrom im Freischnitt zerkleinern. Hierzu können die Schneidelemente als Messer oder Schneidfäden ausgeführt sein. Mittels der Schneidelemente können Überlängen im Strohs beseitigt werden, welche von der Dreschvorrichtung sowie der Abscheidevorrichtung kommend die Reinigungsvorrichtung erreichen. Es lasst sich eine Erhöhung des Zerkleinerungsgrades des Reinigungsabganges erreichen. Weiterhin können Kleckerverluste beim Übergang in die Verteilvorrichtung reduziert werden. Zudem kann durch die Schneidelemente eine verbesserte Feldhygiene erreicht werden, indem Unkrautsamen und Verlustkörner zerstört werden. Dies hat eine Verringerung des Einsatzes von Spritzmitteln sowie einen geringeren Aufwand bei der Bodenbearbeitung zur Unkrautvernichtung zur Folge. Die Welle, an der die Schneidelemente angeordnet sind, kann zudem den zumindest einen Läufer antreiben.

Eine Verbesserung der Zerstörung von Unkrautsamen und Verlustkörner kann dadurch erreicht werde, dass an der Innenseite der den Läufer umgebenden Gehäuseabschnitte mehrere Prallbleche angeordnet sind. Die Prallbleche können bis in den Bereich der Austrittsöffnung angeordnet sein. Bevorzugt können die Prallbleche schwenkbar an der Innenseite der Gehäuseabschnitte angelenkt sein. Zumindest die Prallbleche im Bereich der Austrittsöffnung sind entnehmbar, um bei kritischen Erntebedingungen einem Gutstau vorbeugen zu können.

Weiterhin können an der Innenseite der Gehäuseabschnitte dem zumindest einem Schneidelement gegenüberliegende Gegenmesser angeordnet sein. Dadurch lässt sich der Zerkleinerungsgrad des angesaugten Reinigungsabganges erhöhen, was zu einer weiteren Verbesserung der Feldhygiene beiträgt.

Gemäß einer bevorzugten Weiterbildung kann die Sauggebläseanordnung mittels einer Hebelanordnung aus ihrer Betriebsposition, in der die Übergabe des von der Sauggebläseanordnung bereitgestellten Luft- und Gutstroms an die Verteilvorrichtung erfolgt, in eine Transportposition überführbar sein, in welcher sich die Sauggebläseanordnung in einer Position im Inneren des Maschinengehäuses unterhalb der Abscheidevorrichtung befindet. Insbesondere kann die Sauggebläseanordnung um eine Schwenkachse schwenkbar ausgeführt sein.

Bevorzugt kann die zumindest eine Austrittsöffnung der Sauggebläseanordnung an wenigstens einem Kanalsegment ausgebildet sein, an welches sich das Führungssegment anschließt. Vorzugsweise können mehrere Kanalsegmente in einer gemeinsamen, horizontalen Ebene liegend nebeneinander angeordnet sein. Dabei kann jedes Kanalsegment eine Austrittsöffnung aufweisen.

Des Weiteren kann die Sauggebläseanordnung Luft im Wesentlichen durch einen vor der Reinigungsvorrichtung befindlichen Ansaugbereich ansaugen, wobei im Ansaugbereich wenigstens ein Luftleitelement angeordnet ist. Das wenigstens eine Luftleitelement kann dazu dienen, einen Teilluftstrom in Richtung einer unterhalb der Reinigungsvorrichtung angeordneten Kornförderschnecke umzulenken. Mittels der Kornförderschnecke wird das gereinigte Korn, welches die Reinigungsvorrichtung passiert hat, einer Fördervorrichtung zugeführt, die das Korn in einen Korntank des Mähdreschers fördert. Die Umlenkung des Teilluftstroms in Richtung der Kornförderschnecke bewirkt durch die durch Erhöhung des maximalen Schüttkegels einen höheren Druck auf die Kornförderschnecke, wodurch eine höhere Kornbergeleistung erreicht werden kann. Ein Herausrieseln von Körnern bei hohen Durchsätzen kann zumindest minimiert oder ganz vermieden werden.

Hierzu kann das wenigstens eine Luftleitelement als ein Leitblech und/oder als jalousieartig angeordnete, insbesondere verstellbare, Lamellen ausgeführt sein.

Im Allgemeinen sind die Dreschvorrichtung, die Abscheidevorrichtung, die Reinigungsvorrichtung, die Sauggebläseanordnung und die Häckselvorrichtung von einem Maschinengehäuse umgeben, wobei zumindest im Bereich der Dreschvorrichtung und der Abscheidevorrichtung Verschlusselemente angeordnet sind, welche der Umlenkung des von der Sauggebläseanordnung angesaugten Luftstroms im Inneren des Maschinengehäuses dienen. Mittels der Verschlusselemente kann der von der Sauggebläseanordnung generierte Luftstrom in der Weise umgeleitet werden, dass dieser gezielt kritische Baugruppen über- oder umströmt, um Ablagerungen zu beseitigen. So können durch die gezielte Umlenkung des Luftstroms beispielsweise Ablagerungen auf der als Trennrotor ausgebildeten Abscheidevorrichtung ohne zusätzlichen Arbeitsaufwand behoben werden. Bei einem Fruchtartwechsel lässt sich ein vereinfachtes Reinigen des Mähdreschers und dessen Arbeitsaggregate erreichen. Die Verschlusselemente können automatisch ansteuerbar sein. Auf diese Weise ließe sich ein Reinigungsprogramm für die Arbeitsaggregate des Mähdreschers ermöglichen.

Insbesondere kann sich zwischen einem unterhalb der Abscheidevorrichtung angeordneten Rücklaufboden und einem unterhalb der Dreschvorrichtung angeordneten Förderboden eine belüftete Fallstufe ausbilden. Die Sauggebläseanordnung kann Luft durch die unterhalb der Dreschvorrichtung angeordnete Steinfangmulde zwischen dem durch die zwischen dem Rücklaufboden und dem Förderboden ausgebildete Fallstufe ansaugen. Die zusätzliche Durchströmung sorgt für eine zusätzliche Entmischung des vom Rücklaufboden kommenden Gutstroms und trägt Spreu nach hinten aus dem Mähdrescher aus.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine schematische Darstellung eines Mähdreschers 1 in einer Teilansicht;
- Fig. 2: schematisch eine perspektivische Ansicht der Sauggebläseanordnung;
- Fig. 3: schematisch eine Sauggebläseanordnung in Seitenansicht;
- Fig. 4: ein Schema eines Sensorsystems zur Kornverlusterfassung; und
- Fig. 5: einen Interdigitalkondensator.

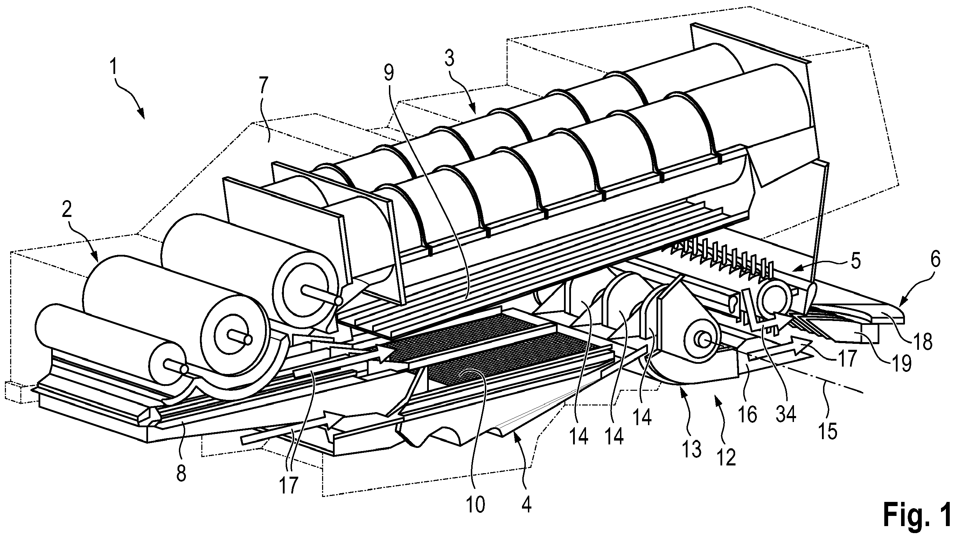

In Fig. 1 ist eine schematische Darstellung eines Mähdreschers 1 in einer Teilansicht gezeigt.

Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel als Trennrotoren ausgeführt ist, eine Reinigungsvorrichtung 4, eine Häckselvorrichtung 5 sowie eine Verteilvorrichtung 6, die als Streublechverteiler ausgeführt ist. Die Dreschvorrichtung 2, die Abscheidevorrichtung 3, die Reinigungsvorrichtung 4 sowie die Häckselvorrichtung 5 sind von einem Maschinengehäuse 7 umgeben. Die Verteilvorrichtung 6 ist außenseitig an dem Maschinengehäuse 7 angeordnet. Unterhalb der Dreschvorrichtung 2 ist ein oszillierend angetriebener Förderboden 8 angeordnet. Unterhalb der Abscheidevorrichtung 3 ist ein Rücklaufboden 9 angeordnet ist. Die Reinigungsvorrichtung 4 umfasst ein Obersieb 10 und ein Untersieb. Der Reinigungsvorrichtung 4 ist eine Sauggebläseanordnung 12 nachgeordnet, die als Reinigungsgebläse dient. Die Sauggebläseanordnung 12 weist zumindest ein Gehäuse 13 auf. Das zumindest eine Gehäuse 13 umfasst spiegelbildlich angeordnete konische Gehäuseabschnitte 14. Die Gehäuseabschnitte 14 sind koaxial zu einer horizontalen Achse 15. An das zumindest eine Gehäuse 13 schließt sich ein Führungssegment 16 an. Die Sauggebläseanordnung 12 saugt einen Luft- und Gutstrom 17 an, der im Wesentlichen Spreu, Kurzstroh und dergleichen enthält. Der Luft- und Gutstrom wird im Wesentlichen im Bereich der Dreschvorrichtung 2 sowie der Reinigungsvorrichtung 4 angesaugt und von der Sauggebläseanordnung 12 über das Führungssegment 16 an die Verteilvorrichtung 6 weitergeleitet. Das Führungssegment 16 überbrückt den horizontal verlaufenden Abschnitt zwischen der Sauggebläseanordnung 12 und der Verteilvorrichtung 6. Oberhalb des Führungssegments 16 ist die Häckselvorrichtung 5 angeordnet, welche einen Gutstrom 34, der im Wesentlichen aus zerkleinertem Stroh besteht, an die Verteilvorrichtung 6 abgibt. Durch das Führungssegment 16 wird das Austreten von gehäckseltem Gut vor dem Erreichen der Verteilvorrichtung 6 verhindert.

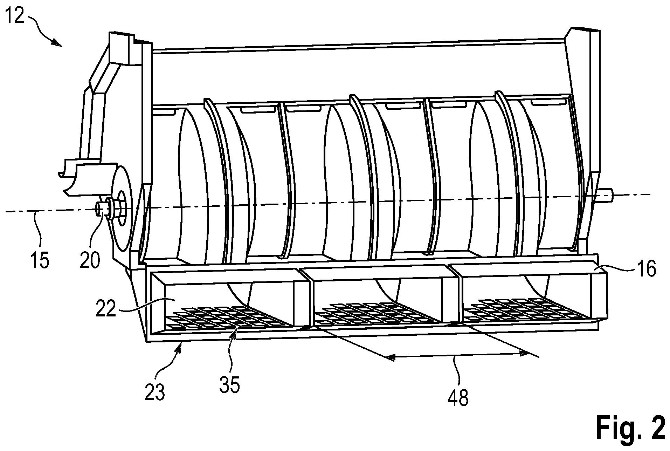

Zusätzlich zur Fig. 1 zeigt die Fig. 2 eine schematische perspektivische Ansicht der Sauggebläseanordnung 12. Das zumindest eine Gehäuse 13 der Sauggebläseanordnung 12 kann um eine horizontale Achse 15 aus ihrer Betriebsposition, in der die Übergabe des von der Sauggebläseanordnung 12 bereitgestellten Luft- und Gutstroms 17 an die Verteilvorrichtung 6 erfolgt, in eine Transportposition überführbar sein, in welcher sich die Sauggebläseanordnung 12 in einer Position unterhalb der Abscheidevorrichtung 3 und teilweise oberhalb der Reinigungsvorrichtung 4 befindet.

Die als Streublechverteiler ausgeführte Verteilvorrichtung 6 umfasst einen Deckelbauteil 18, auf dessen Unterseite Streuleitbleche 19 angeordnet sind. Die Streuleitbleche 19 sind jeweils um eine vertikale Achse verschwenkbar an dem Deckelbauteil 18 angeordnet. Im Inneren des Deckelbauteils 18 ist eine Aktorik angeordnet, mittels der die Streuleitbleche 19 um die vertikale Achse einzeln oder gruppenweise verschwenkbar sind.

An das Obersieb 10 der Reinigungsvorrichtung 4 schließt sich die Sauggebläseanordnung 12 an. Jeder Gehäuseabschnitt 14 weist eine Eintrittsöffnung 24 auf. Durch die jeweilige Eintrittsöffnung 24 wird der Luft- und Gutstrom 17 von den Läufern 21 angesaugt.

Im dargestellten Ausführungsbeispiel weist jeder Kanalabschnitt 22 eine Austrittsöffnung 28 auf, aus welcher der Luft- und Gutstrom 17 austritt. Im Bereich jeder Austrittsöffnung 28 ist zumindest ein Sensorsystem 23 angeordnet, welches der Erfassung einer Eigenschaft des Luft- und Gutstromes 17 dient. So kann zur Erfassung von Verlustkörnern ein Sensorsystem 23 zumindest ein in der Sauggebläseanordnung 12 angeordnetes kapazitives Bauelement 35 aufweisen. Die Anordnung des zumindest einen kapazitives Bauelementes 35 erfolgt dabei an Wandbereichen des Kanalabschnittes 22, an welchem der Luft- und Gutstrom 17 hauptsächlich entlang strömt. Das kapazitive Bauelement 35 kann als planarer Kondensator und/oder als Interdigitalkondensator ausgebildet sein.

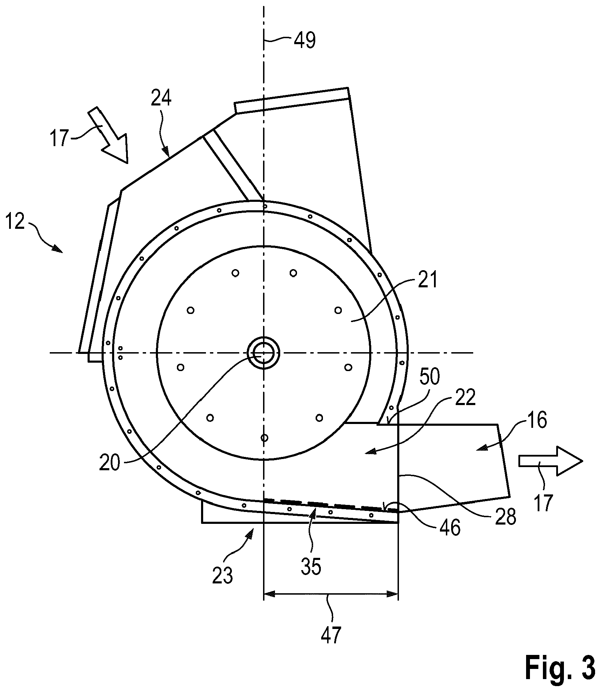

In Fig. 3 ist schematisch die Sauggebläseanordnung 12 in Seitenansicht dargestellt. Das Sensorsystem 23 kann mehrere kapazitive Bauelemente 35 aufweisen, die an und/oder in einem Außenboden 46 des Kanalsegments 22 der Sauggebläseanordnung 12 angeordnet sind. Im Gegensatz zu der einfachen Darstellung der Fig. 3, können die kapazitiven Bauelemente 35 derart in dem Außenboden 46 eingebracht sein, dass kein Strömungswiderstand für den Luft- und Gutstrom 17 erzeugt wird. Dem Außenboden 46 des Kanalsegments 22 liegt ein Innenboden 50 gegenüber, an dem keine kapazitiven Bauelemente 35 angeordnet sind. Der Außenboden 46 weist bezüglich einer vertikalen Achse 49, die durch den Mittelpunkt der Welle 20 führt, eine weitere Beabstandung zum Mittelpunkt der Welle 20 als der Innenboden 50 auf. Die kapazitiven Bauelemente 35 können in einem planaren, also nicht gekrümmten Bereich, des Außenbodens 46 angeordnet sein. Der planare Außenboden 46 hat gemäß der Fig. 2 eine Bodenbreite 48 und gemäß Fig. 3 eine Bodenlänge 47. Die Bodenbreite 48 entspricht im Wesentlichen einer Querbreite der Austrittsöffnung 28. Die Bodenlänge 47 entspricht dem Abstand von der Austrittsöffnung 28 bis zur vertikalen Achse 49, wobei die vertikale Achse 49 insbesondere parallel zur Erdanziehungskraft ausgerichtet sein kann. Die Anzahl der kapazitiven Bauelemente 35 und/oder die größentechnische Ausgestaltung der kapazitiven Bauelemente 35 kann derart ausgebildet sein, dass dieser planare Außenboden 46 im Wesentlichen vollständig oder gleichmäßig mit kapazitiven Bauelementen 35 ausgestattet ist.

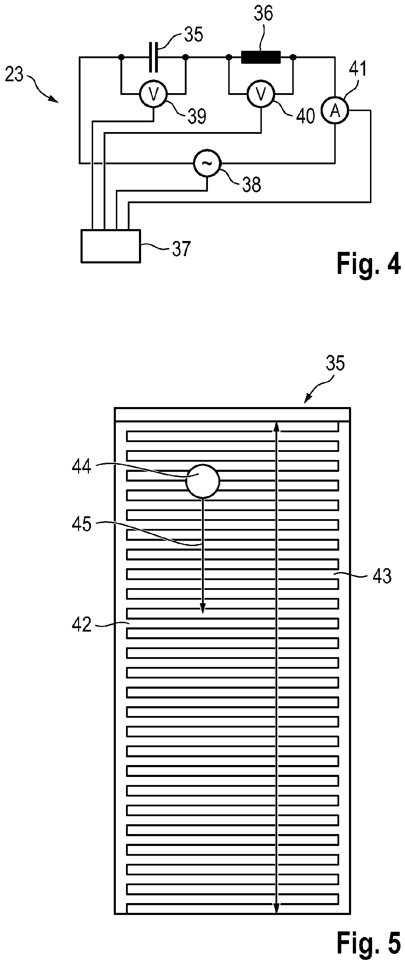

Die Fig. 4 zeigt ein Schema des Sensorsystems 23, das wenigstens ein kapazitives Bauelemente 35, wie einen Kondensator, und ein induktives Bauelement 36, wie eine Spule, und eine Messeinrichtung 37 aufweist. Die Messeinrichtung 37 regt den Schwingkreis aus dem kapazitiven Bauelemente 35 und dem induktiven Bauelement 36 über eine Spannungsquelle 38 an und misst eine erste Spannung 39 über dem kapazitiven Bauelemente 35, eine zweite Spannung 40 über dem induktiven Bauelement 36 und/oder den Strom 41 durch den Schwingkreis. Es versteht sich, dass der Schwingkreis sowohl als Reihenschaltung als auch als Parallelschaltung ausgeführt sein kann.

Die Fig. 5 zeigt ein Schema eines Interdigitalkondensators 35 des Sensorsystems 23. Der Interdigitalkondensator 35 weist eine erste Elektrode 42 und eine zweite Elektrode 43 auf. Die Elektroden 42, 43 weisen jeweils eine Vielzahl an fingerartigen Strukturen auf, wobei die fingerartigen Strukturen ineinander verschränkt sind. Ein Verlustkorn 44 aus dem Luft- und Gutstrom 17 beeinflusst die Kapazität des Interdigitalkondensators 35 unabhängig von seiner Position an der Oberfläche des Interdigitalkondensators 35. Das Verlustkorn 44 des Luft- und Gutstroms 17 kann daher über die gesamte Länge des Interdigitalkondensators 35 in der Bewegungsrichtung 45 des Luft- und Gutstroms 17 detektiert werden.

### Bezugszeichenliste

| | | | |
|---|---|---|---|
| 1 | Mähdrescher | 43 | Zweite Elektrode |
| 2 | Dreschvorrichtung | 44 | Verlustkorn |
| 3 | Abscheidevorrichtung | 45 | Bewegungsrichtung |
| 4 | Reinigungsvorrichtung | 46 | Außenboden |
| 5 | Häckselvorrichtung | 47 | Bodenlänge |
| 6 | Verteilvorrichtung | 48 | Bodenbreite |
| 7 | Maschinengehäuse | 49 | vertikale Achse |
| 8 | Förderboden | 50 | Innenboden |
| 9 | Rücklaufboden | | |
| 10 | Obersieb | | |
| 12 | Sauggebläseanordnung | | |
| 13 | Gehäuse | | |
| 14 | Gehäuseabschnitt | | |
| 15 | Horizontale Achse | | |
| 16 | Führungssegment | | |
| 17 | Luft- und Gutstrom | | |
| 18 | Deckelbauteil | | |
| 19 | Streuleitblech | | |
| 20 | Welle | | |
| 21 | Läufer | | |
| 22 | Kanalsegment | | |
| 23 | Sensorsystem | | |
| 24 | Eintrittsöffnung | | |
| 28 | Austrittsöffnung | | |
| 34 | Gutstrom | | |
| 35 | kapazitives Bauelement | | |
| 36 | induktives Bauelement | | |
| 37 | Messeinrichtung | | |
| 38 | Spannungsquelle | | |
| 39 | Erste Spannung | | |
| 40 | Zweite Spannung | | |
| 41 | Strom | | |
| 42 | Erste Elektrode | | |

## Patentansprüche

1. Selbstfahrender Mähdrescher (1) zur Aufnahme und Behandlung von Erntegut mit einer Reinigungsvorrichtung (4), einer Sauggebläseanordnung (12) und wenigstens einem Sensorsystem (23), wobei die Reinigungsvorrichtung (4) wenigstens teilweise in einem Ansaugbereich der Sauggebläseanordnung (12) angeordnet ist,
**dadurch gekennzeichnet,**
**dass** das Sensorsystem (23) wenigstens ein in der Sauggebläseanordnung (12) angeordnetes kapazitives Bauelement (35) aufweist.

2. Selbstfahrender Mähdrescher (1) nach Anspruch 1,
**dadurch gekennzeichnet,**
**dass** das kapazitive Bauelement (35) im Bereich zumindest einer Austrittsöffnung (28) der Sauggebläseanordnung (12) angeordnet ist.

3. Selbstfahrender Mähdrescher (1) nach Anspruch 1 oder 2,
**dadurch gekennzeichnet,**
- **dass** das Sensorsystem (23) einen Schwingkreis und eine Messeinrichtung (37) aufweist,
- wobei der Schwingkreis aus zumindest dem einem kapazitiven Bauelement (35) mit einer Kapazität und einem induktiven Bauelement (36) besteht,
- wobei ein die Sauggebläseanordnung (12) durchlaufender Luft- und Gutstrom (17) das kapazitive Bauelement (35) passiert und zumindest temporär die Kapazität des kapazitiven Bauelementes (35) verändert,
- wobei die Messeinrichtung (37) die Resonanzfrequenz des Schwingkreises bestimmt.

4. Selbstfahrender Mähdrescher (1) nach einem der vorhergehenden Ansprüche,
**dadurch gekennzeichnet,**
**dass** das kapazitive Bauelement (35) als planarer Kondensator ausgebildet ist.

5. Selbstfahrender Mähdrescher (1) nach Anspruch 4,
**dadurch gekennzeichnet,**
**dass** das kapazitive Bauelement (35) als Interdigitalkondensator ausgebildet ist.

6. Selbstfahrender Mähdrescher (1) nach einem der vorhergehenden Ansprüche,
**dadurch gekennzeichnet,**
- **dass** das Sensorsystem (23) mehrere Schwingkreise mit mehreren kapazitiven Bauelementen (35) aufweist,
- wobei die kapazitiven Bauelemente (35) in der Sauggebläseanordnung (12) angeordnet sind.

7. Selbstfahrender Mähdrescher (1) nach einem der Ansprüche 3 bis 6,
**dadurch gekennzeichnet,**
**dass** die Messeinrichtung (37) die Resonanzfrequenz mit einer vorbestimmten Messfrequenz bestimmt.

8. Selbstfahrender Mähdrescher (1) nach Anspruch 7,
**dadurch gekennzeichnet,**
**dass** die Resonanzfrequenz größer ist als das Zehnfache der Messfrequenz.

9. Selbstfahrender Mähdrescher (1) nach einem der Ansprüche 3 bis 8,
**dadurch gekennzeichnet,**
**dass** die Messeinrichtung (37) dazu vorgesehen und eingerichtet ist, aus der Resonanzfrequenz des Schwingkreises einen Kornverlustwert bezüglich der im Luft- und Gutstrom (17) mitströmenden Verlustkörner (44) zu ermitteln.

10. Selbstfahrender Mähdrescher (1) nach einem der vorhergehenden Ansprüche,
**dadurch gekennzeichnet,**
- **dass** der selbstfahrende Mähdrescher (1) eine Dreschvorrichtung (1), eine Abscheidevorrichtung (3), eine Häckselvorrichtung (5) sowie zumindest eine Verteilvorrichtung (6) zur Annahme und Ausbringung eines die Häckselvorrichtung (5) durchlaufenden Gutstroms (34) aufweist,
- wobei der Reinigungsvorrichtung (4) die Sauggebläseanordnung (12) mit zumindest einem Gehäuse (13), zumindest einer Eintrittsöffnung (24) und zumindest einer Austrittsöffnung (28) nachgeordnet ist,
- wobei zumindest eine Eintrittsöffnung (24) der Sauggebläseanordnung (12) der Reinigungsvorrichtung (4) zugewandt und die zumindest eine Austrittsöffnung (28) der Sauggebläseanordnung (12) unterhalb der Häckselvorrichtung (5) positioniert ist, so dass eine Übergabe eines von der Sauggebläseanordnung (12) durch die zumindest eine Eintrittsöffnung (24) angesaugten Luft- und Gutstroms (17) an die Verteilvorrichtung (6) in einem unteren Bereich der Verteilvorrichtung (6) erfolgt,
- wobei die Verteilvorrichtung (6) in einem oberen Bereich den die Häckselvorrichtung (5) durchlaufenden Gutstrom (34) und in dem unteren Bereich den Luft- und Gutstrom (17) ausbringt.

11. Selbstfahrender Mähdrescher (1) nach Anspruch 10,
**dadurch gekennzeichnet,**
- **dass** in dem zumindest einem Gehäuse (13) zumindest ein Läufer (21) um eine horizontale Achse (15) rotierend angeordnet ist, und/oder
- **dass** das zumindest ein Gehäuse (13) zwei spiegelbildlich angeordnete konische Gehäuseabschnitte (14) aufweist, die koaxial zu der horizontalen Achse (15) angeordnet sind.

12. Selbstfahrender Mähdrescher (1) nach Anspruch 11,
**dadurch gekennzeichnet,**
**dass** die zumindest eine Eintrittsöffnung (24) als eine koaxial zu der horizontalen Achse (15) angeordnete Öffnung in zumindest einem der Gehäuseabschnitte (14) ausgebildet ist und die zumindest eine Austrittsöffnung (28) als eine sich senkrecht zu einem einen Bereich zwischen Sauggebläseanordnung (12) und Verteilvorrichtung (6) überbrückenden Führungssegment (16) erstreckende Öffnung.

13. Selbstfahrender Mähdrescher (1) nach einem der Ansprüche 11 bis 12,
**dadurch gekennzeichnet,**
**dass** die zumindest eine Eintrittsöffnung (24) durch jeweils einen sich abschnittsweise in Umfangsrichtung der horizontalen Achse (15) erstreckenden, sich in axialer Richtung verjüngenden Leitabschnitt (25) begrenzt ist, wobei der Leitabschnitt (25) auf seiner der Reinigungsvorrichtung (4) zugewandten Seite abschnittsweise unterbrochen ist.

14. Selbstfahrender Mähdrescher (1) nach einem der Ansprüche 11 bis 13,
**dadurch gekennzeichnet,**
**dass** im Bereich der Eintrittsöffnung (24) Schneidelemente an einer um die horizontale Achse (15) rotierenden Welle (20) angeordnet sind.

15. Selbstfahrender Mähdrescher (1) nach einem der Ansprüche 10 bis 14,
**dadurch gekennzeichnet,**
**dass** die Sauggebläseanordnung (12) mittels einer Hebelanordnung aus ihrer Betriebsposition, in der die Übergabe des von der Sauggebläseanordnung (12) bereitgestellten Luft- und Gutstroms (17) an die Verteilvorrichtung (6) erfolgt, in eine Transportposition überführbar ist, in welcher sich die Sauggebläseanordnung (12) in einer Position im Inneren des Maschinengehäuses (7) unterhalb der Abscheidevorrichtung (3) befindet.
